# EUROPEAN PATENT SPECIFICATION

(11) **EP 3 764 199 B1**
(45) Date of publication and mention of the grant of the patent: **20.11.2024**
(21) Application number: 19186015.4
(22) Date of filing: 12.07.2019
(51) Int. Cl.: G06F 3/01, G06F 3/03, G06F 3/042

(54) **METHODS, APPARATUSES AND COMPUTER PROGRAMS FOR CONTROLLING A USER INTERFACE**
VERFAHREN, VORRICHTUNGEN UND COMPUTERPROGRAMME ZUR STEUERUNG EINER BENUTZERSCHNITTSTELLE
PROCÉDÉS, APPAREILS ET PROGRAMMES INFORMATIQUES POUR COMMANDER UNE INTERFACE UTILISATEUR

(43) Date of publication of application: 13.01.2021
(73) Proprietor: Bayerische Motoren Werke Aktiengesellschaft, 80809 München (DE)
(72) Inventor: Eichhorn, Julian, Menlo Park, CA 94025 (US); Iliffe-Moon, Etienne, Menlo Park, CA 94025 (US); Mok, Brian, Mountain View, CA 94043 (US); Liu, Zane, Mountain View, CA 94043 (US)

(56) References cited:
- JP-A- 2012 089 079
- JP-A- 2018 073 170
- US-A1- 2012 113 223
- US-A1- 2013 086 531

## Description

### Field

Examples relate to methods, apparatuses and computer programs for controlling a user interface, more specifically, but not exclusively, to concepts for controlling a user interface in which the user interface is projected onto a hand (or another part of the user's body).

### Background

A variety of approaches exist for controlling user interfaces: Since the beginning of electrical systems, haptic buttons or levers have been used to operate machines, such as simple push buttons. In order to be able to operate more complex systems, these buttons were gradually combined into so-called keyboards, as they are still used today to operate computers. But other input devices, such as mice, are also used to operate user interfaces.

Another possibility frequently used since the early 2000s to operate user interfaces is touchscreens (touch-sensitive display devices), in which the user can directly manipulate the user interface with a finger or a stylus (i.e. a pen for operating touchscreens). However, these input options all have the disadvantage that their implementations require a certain amount of space or have unfavorable ergonomics: For example, keyboards and mice require a large area on which they can be accommodated, while touchscreens are in many cases ergonomically questionable, for example in screens that are arranged almost vertically in front of the user.

There is a desire for an improved input concept to control a user interface.

US patent application US 2013/086531 A1 relates to a command issuing device, which uses a projection device to project a user interface on the fingers of the user. The user can tap the respective fingers with another finger to control the user interface. In JP 2018 073170 A, a user interface is projected onto a palm of a user. A user interface element may be selected moving the hand relative to the user interface. The selection is confirmed by forming a fist. US patent application US 2012/1 13223 A1 relates to user interaction in augmented reality. Similar to the previous examples, a user interface is projected onto the hand of a user and controlled by bending the digit on which a menu item of the user interface is projected. In JP 2012 089079 A, a user interface is projected onto a hand of an occupant of a vehicle. Different menu items may be selected by swiping the hand horizontally. The selection is confirmed by pinching two fingers together. However, in none of the above patent applications, a rotational movement of the hand is determined and used to control the user interface.

### Summary

This desire is addressed by the subject of the independent claims.

Embodiments of the present disclosure are based on the insight that a hand can be used to both display the user interface and (at the same time) control the user interface by detecting a movement of the hand. In embodiments, the user interface is projected onto the hand of a user. The movement of the hand is recorded via a distance sensor, i.e. the movement of the hand that is orthogonal to a depth axis between the distance sensor and the hand. In addition, movements along the depth axis can be detected, enabling intuitive control of the user interface. As an alternative to the hand, another part of the body, such as an arm/forearm or a leg/shank, may be used both as projection surface and entity controlling the user interface. Correspondingly, in such cases, the movement of the other body part may be recorded and used to control the user interface.

Embodiments of the present disclosure provide a method for controlling a user interface. The method comprises projecting a user interface onto a hand of a user. The method comprises determining three-dimensional distance information of a distance between the hand and a distance sensor. The method comprises determining a movement of at least parts of the hand based on the three-dimensional distance information. Determining the movement of at least parts of the hand comprises determining a rotational movement of the hand around a rotation axis of the hand when the hand is rotated by rotation of the wrist and/or upper arm. The method comprises controlling the user interface based on the movement of at least parts of the hand. The user interface is controlled based on the rotational movement. By projecting the user interface onto the hand, determining the movement of the hand and controlling the user interface based on the determining movement, the user interface can be controlled without having to provide an explicit area for operating the user interface.

For example, the method may comprise determining a movement of the hand orthogonal to a depth axis between the distance sensor and the hand. The user interface may be controlled based on the movement of the hand orthogonal to the depth axis. This allows intuitive control of the user interface via movements in an x/y plane being orthogonal to the z-axis/depth axis.

For example, the movement of the hand orthogonal to the depth axis may be used to select one of a plurality of choices. As movements along two axes are possible in the x/y plane, choices along these two axes can be selected efficiently.

The selection of the choice may be visualized by a selection field in the user interface. The movement of the hand orthogonal to the depth axis may control the user interface such that the selection field is shifted in accordance with the movement of the hand so that a position of the selection field on the hand remains substantially constant and the selection field shifts relative to the plurality of choices. Alternatively, the movement of the hand orthogonal to the depth axis may control the user interface such that the plurality of choices are shifted according to the movement of the hand so that a position of the plurality of choices on the hand remains substantially constant and the plurality of choices are shifted relative to the selection field. Both paradigms offer advantages and disadvantages.

Determining the movement of at least parts of the hand comprises determining a rotational, and optionally a curvature movement, of at least parts of the hand. The user interface is controlled based on the rotational movement, and optionally based on the curvature movement. The determination of rotational or curvature movement can be enabled or improved by determining a hand movement in the depth axis. The rotational or curvature movements can be used to control the user interface.

In some embodiments, at least two choices of the user interface may be projected onto at least two fingers. One of the at least two choices may be selected if the corresponding finger is bent. This enables a direct relationship between the choice and the part of the hand that is to be pressed to select the choice.

For example, one of the at least two choices is selected if the corresponding finger may be touched by another finger on which no choice is projected. For example, the corresponding finger may be touched with a thumb of the hand or with a finger of another hand.

In at least some embodiments, determining the movement of at least portions of the hand comprises determining a movement of the entire hand along a depth axis between the hand and the distance sensor. The user interface may be controlled based on the movement of the entire hand along the depth axis. This may enable further gestures.

For example, a movement of the entire hand along the depth axis in the direction of the distance sensor may change or activate an element of the user interface. In the case of activation, the movement of the entire hand along the depth axis (e.g. toward the distance sensor) may correspond to the "click" of a mouse.

Determining the three-dimensional distance information may further comprise determining three-dimensional distance information of a distance between a further hand and the distance sensor. The method may comprise determining a movement of the further hand based on the three-dimensional distance information of the distance between the further hand and the distance sensor. The controlling of the user interface may be further based on the movement of the further hand. An intuitive selection can be made by using the further hand.

In some embodiments, the three-dimensional distance information of the distance between the hand and the distance sensor comprises a plurality of distance values for different portions of the hand. The movement of at least parts of the hand may be determined based on the plurality of distance values. This enables or improves the detection of the movement of individual parts of the hand.

The method may further comprise providing an acoustic feedback based on the controlling of the user interface. This may provide the user with an improved feedback on the abstract operation of the user interface by hand.

In some embodiments, the method comprises providing a control signal to the user interface to effect the controlling of the user interface. The controlling of the user interface may be visualized by the user interface. The control signal may be used to visualize and apply the interaction between the hand and the user interface.

The method may further comprise determining whether a palm or a back of the hand faces the distance sensor, and activating the user interface if the palm is brought to face the distance sensor by a rotational movement of the hand. For example, a hand rotation can be used to activate the user interface by intuitively switching between a hand side that is only used passively and a side of the hand that is actively used.

Additionally or alternatively, the method may comprise detecting whether the hand is opened or closed based on the movement of at least parts of the hand. The method may comprise activating the user interface if the hand being opened is detected and deactivating the user interface if the hand being closed is detected. By "opening" and "closing" the hand, the user can intuitively signal that he wishes to use the user interface or that he wishes to end the use.

The method illustrated above refers to the overall system of distance sensor, projection device, processing module and user interface. In the following, the method is illustrated with respect to an execution of the method by a processing module, such as a processor. The method may further comprise providing a display signal to a projection device to cause the projection of the user interface onto the hand of a user. The method may further comprise receiving a distance measurement signal from a distance sensor, wherein the three-dimensional distance information of the distance between the hand and the distance sensor is determined based on the distance measurement signal. The method may further comprise providing a control signal to the user interface to effect the controlling of the user interface based on the movement of at least parts of the hand.

Embodiments of the present disclosure provide a computer program having a program code for performing the further method, when the computer program is executed on a computer, a processor, or a programmable hardware component.

Embodiments of the present disclosure provide an apparatus for controlling a user interface. The apparatus comprises at least one interface for communicating with a projection device and with a distance sensor. The apparatus comprises a processing module configured to provide a display signal to the projection device to cause a projection of the user interface onto a hand of a user. The processing module is configured to receive a distance measurement signal from the distance sensor. The processing module is configured to determine three-dimensional distance information of a distance between the hand and the distance sensor based on the distance measurement signal. The processing module is configured to determine a movement of at least parts of the hand based on the three-dimensional distance information. Determining the movement of at least parts of the hand comprises determining a rotational movement of the hand around a rotation axis of the hand when the hand is rotated by rotation of the wrist and/or upper arm. The processing module is configured to provide a control signal to the user interface to effect the controlling of the user interface based on the movement of at least parts of the hand. The user interface is controlled based on the rotational movement.

### Brief description of the Figures

Some examples of apparatuses and/or methods will be described in the following by way of example only, and with reference to the accompanying figures, in which
- Figs. 1a to 1c: show flow charts of embodiments of a method for controlling a user interface;
Fig. 1d shows a block diagram of an embodiment of an apparatus for controlling a user interface;
Figs. 2a and 2b show schematic diagram of embodiments of a projection device for projecting a user interface;
Fig. 3 show an overview of a hand movement-based control of a user interface;
Fig. 4 shows a schematic diagram of an activation of a user interface;
Figs. 5a to 5j show schematic drawings of a hand movement-based control of a user interface; and
Fig. 6 shows a further schematic drawing of a hand movement-based control of a user interface.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Same or like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B, if not explicitly or implicitly defined otherwise. An alternative wording for the same combinations is "at least one of A and B" or "A and/or B". The same applies, mutatis mutandis, for combinations of more than two Elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

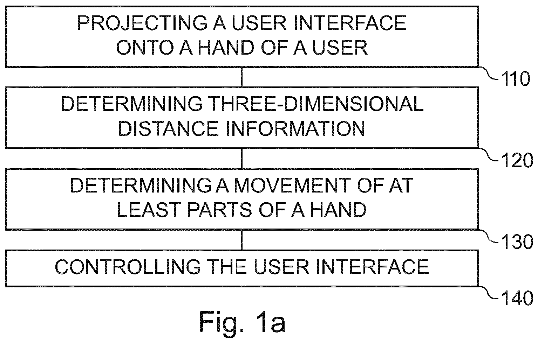

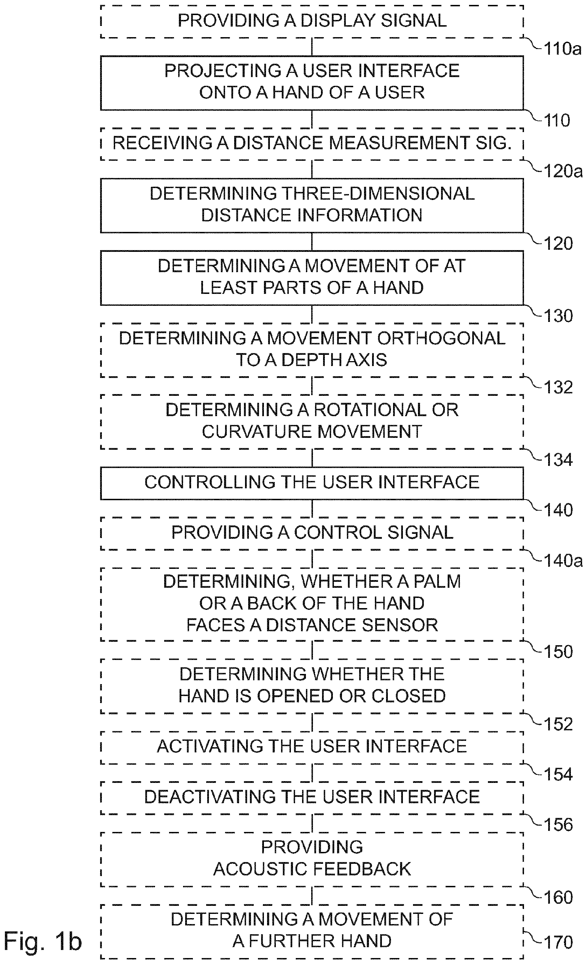

Figs. 1a to 1c show flow charts of embodiments of a method for controlling a user interface. The method of Figures 1a and 1b relate to an overall system in which a projection device, a distance sensor and a processing module are combined to perform the method. The method comprises projecting 110 a user interface onto a hand of a user (or more general, a body part of the user). The method comprises determining 120 three-dimensional distance information of a distance between the hand (or body part) and a distance sensor. The method comprises determining 130 a movement of at least parts of the hand (or body part) based on the three-dimensional distance information. The method comprises controlling 140 the user interface based on the movement of at least parts of the hand (or body part). The method may be performed by a system comprising the projection device, the distance sensor and the processing module.

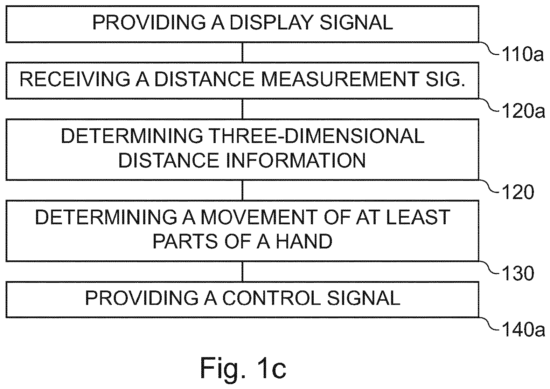

Fig. 1c, on the other hand, focuses on the corresponding method from the point of view of the processing module. The method comprises providing 110a a display signal to a projection device to cause a projection of the user interface onto a hand (or body part) of a user. The method comprises receiving 120a a distance measurement signal from a distance sensor. The method comprises determining 120 three-dimensional distance information of a distance between the hand (or body part) and the distance sensor based on the distance measurement signal. The method further comprises Determining 130 a movement of at least parts of the hand (or body part) based on the three-dimensional distance information. The method comprises providing 140a a control signal to the user interface to effect the controlling of the user interface based on the movement of at least parts of the hand (or body part). As can be seen, the method of Fig. 1c represents an implementation of the method of Figs. 1a and 1b, in which the processing steps are carried out by the processing module, for example in conjunction with at least one interface. Accordingly, characteristics and additional features of the method are Fig. 1a and 1b may also apply to the method of Fig. 1c.

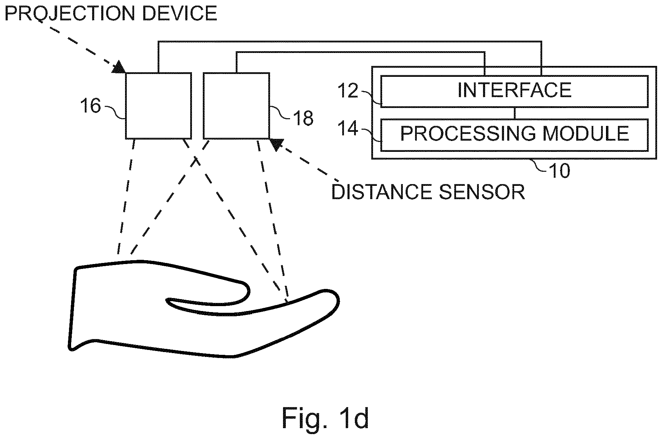

Fig. 1d shows a block diagram of an embodiment of an apparatus for controlling a user interface 20. The apparatus 10 comprises at least one interface 12 for communicating with a projection device 16 and with a distance sensor 18. The apparatus 10 comprises a processing module 14 that is coupled to the at least one interface 12. The processing module 14 may be configured to perform the method of Fig. 1c, e.g. in conjunction with the at least one interface 12. For example, the pressing module 14 is configured to provide a display signal to the projection device 16 to cause a projection of the user interface onto a hand (or body part) of a user. The processing module is configured to receive a distance measurement signal from the distance sensor 18. The processing module 14 is configured to determine three-dimensional distance information of a distance between the hand (or body part) and the distance sensor based on the distance measurement signal. The processing module 14 is configured to determine a movement of at least parts of the hand (or body part) based on the three-dimensional distance information. The processing module is configured to provide a control signal to the user interface to effect the controlling of the user interface based on the movement of at least parts of the hand (or body part). Fig. 1d further shows a system comprising the projection device 16, the distance sensor 18 and the apparatus 10.

Embodiments relate to with methods, computer programs, and devices for controlling a user interface. In this case, the user interface is a visual user interface, i.e. it may be perceived by the user's eyes, and it is modifiable, i.e. the user interface changes, for example based on an input by the user or based on events of an operating system. To project the user interface onto the hand of the user, the method may comprise providing 110a a display signal to the projection device to cause (i.e. effect) a projection of the user interface onto the hand of the user. This display signal may include, for example, video and/or control information adapted to project the display signal on the user interface.

For example, the projection device may be located above the user's hand, such as in a floor lamp, ceiling lamp, ceiling of a room (e.g. of an office, living room, public space, restaurant etc.) or vehicle (e.g. a car, a train car or a bus), or on a wall or electronic device such as a monitor. The user interface may be projected by the projection device (from above) onto a surface of the user's hand. The distance sensor may also be placed above the user's hand, such as the projection unit/parallel to the projection unit. Alternatively, the distance sensor may be located below the user's hand.

The projection of the user interface onto the user's hand may depend on the distance between the user's hand and the projection device. In general, the user interface has a fixed target size that may be adjusted based on the distance between the user's hand and the projection device, for example to achieve a given absolute size (e.g. 8x10 cm) or a given size relative to the hand (e.g. 50%/60%/70%/80% of an area of the back of the hand or the inside of the hand) of the user interface. Furthermore, the projection of the user interface onto the user's hand may be adjusted based on the distance to ensure that the user interface is "sharp" on the hand, for example by adjusting the focus distance, or by correcting for perspective distortions that occur due to the shape or orientation of the hand. For example, as the palm of the hand is a nonplanar surface, the perspective of the projection may be adjusted/corrected to account for the shape and/or orientation of the hand. Accordingly, the projection may use dynamic projection mapping based on the three-dimensional distance information. In dynamic projection mapping, a projection is dynamically mapped onto a non-rigid surface, e.g. based on an adjustment of the projection based of the shape, deformation and/or orientation of the surface (i.e. the hand). In other words, the method may comprise adjusting the projection of the user interface based on the three-dimensional distance information, for example to achieve a given absolute size or a given size relative to the hand, to focus the projection, or to adjust or correct a perspective of the projection. The focusing of the projection may be achieved by changing the focal distance based on the three-dimensional distance information. This may e.g. be foregone if a focus-free laser projection of is used, e.g. if the projector is a focus-free laser projector. The absolute or relative size of the user interface may be changed by changing the image angle based on three-dimensional distance information. The perspective of the projection may be adjusted or corrected by performing a perspective transformation (or even a freeform transformation) that takes into account a shape and/or orientation of the hand, e.g. based on the three-dimensional distance information.

Furthermore, the projection may be adjusted orthogonally to the depth axis based on a movement of the hand, i.e. a target direction of the projection may be adjusted orthogonally to the depth axis depending on the movement of the hand, e.g. based on the three-dimensional distance information. The position of the hand of the user may change while the user interface is manipulated. For example, while the user may stay substantially in the same place, e.g. on a seat of a vehicle or on a seat at a desk, the position of his hand may change during the projection of the user interface on the hand of the user. Accordingly, to project the user interface onto the hand of the user, a position of the hand may be tracked. In other words, the method may comprise determining a position of the hand based on the three-dimensional distance information. Based on the position of the hand, the projection may be adjusted. In other words, the method may comprise adjusting the projection based on the position of the hand, e.g. so that the user interface is projected onto the hand if the position of the hand is changed.

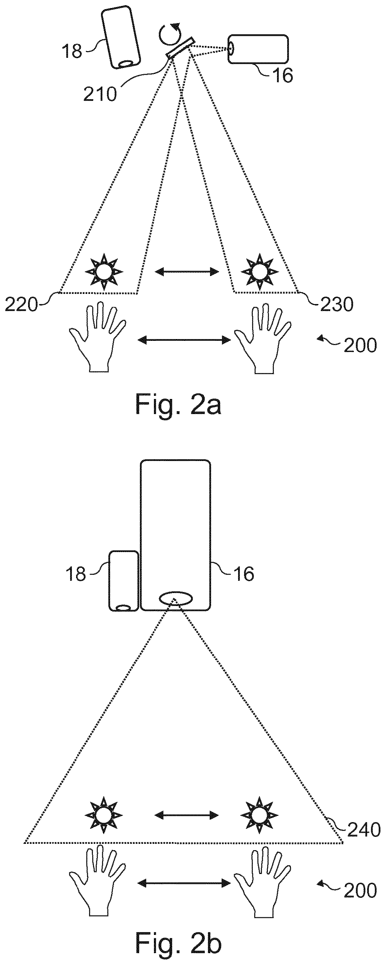

As shown at a later part of the description in Figs. 2b, the projection device may be a wide-angle projection device, e.g. having a projection angle of more than 30°, that projects a wider projection onto a general area the hand of the user may be located in. In this case, the projection may be adjusted by adjusting an area of the wider projection that is used for the user interface, based on the position of the hand. Alternatively, a narrow-angle projection device, e.g. having a projection angle of at most 30°, may be used, that projects a smaller projection onto the hand. In this case, the projection may be adjusted by tilting the projection device or by tilting a mirror reflecting the projection based on the position of the hand (e.g. as shown in Fig. 2a).

The method comprises determining 120 the three-dimensional distance information of the distance between the hand and the distance sensor. For example, to determine the three-dimensional distance information, a distance measurement signal may be received (i.e. obtained) from the distance sensor. In other words, the method may comprise receiving 120a the distance measurement signal from the distance sensor. The three-dimensional distance information may be determined based on the distance measurement signal. For example, the distance sensor may be a so-called Time-of-Flight (ToF) based distance sensor, such as a time-of-flight-based distance sensor that is based on modulated light or a time-of-flight-based distance sensor that is based on ultrasound. The distance sensor may be an optical distance sensor, such as a time-of-flight distance sensor based on modulated light, a distance sensor based on structured light, or a LIDAR-based distance sensor (Light Detection and Ranging). For example, the distance measurement signal may include raw data or pre-processed data from the corresponding distance sensor; determining the three-dimensional distance information may comprise processing the raw data or pre-processed sensor data.

The distance information is three-dimensional, i.e. the distance information distinguishes not only distances between the distance sensor and the hand in the depth axis, but also orthogonally to the depth axis. If, for example, the depth axis (also z-axis) is defined by the axis between the hand and the distance sensor, a lateral plane defined by an x-axis and a y-axis spans orthogonal to the depth axis. Within the lateral plane, which is orthogonal to the depth axis, the distance information distinguishes between different positions on the lateral plane, i.e. the movement of the hand is not only determined relative to the depth axis, but also orthogonal to it. This may be used to not perceive the hand as a whole, but to determine and track a plurality (about at least two, at least four, at least 10) distance values for different portions of the hand. In other words, the three-dimensional distance information of the distance between the hand and the distance sensor may comprise a plurality of distance values for different portions of the hand. The movement of at least parts of the hand may be determined 130 based on the plurality of distance values. The plurality of distance values may be used not only to capture the movement of the hand "as a whole" relative to the depth axis, but also to individually determine the movement of the portions/parts of the hand.

In addition to the hand on which the user interface is projected, a further hand may be tracked so it can be used to control the user interface. Accordingly, determining 120 the three-dimensional distance information may further comprise determining three-dimensional distance information of a distance between the further hand and the distance sensor. The three-dimensional distance information of the distance between the further hand and the distance sensor may be determined similar to the three-dimensional distance information of the distance between the hand (on which the user interface is projected) and the distance sensor.

The method comprises determining 130 a movement of at least parts of the hand based on the three-dimensional distance information. The movement of at least parts of the hand may be caused by a movement of the entire hand in the lateral plane or along the depth axis, by a rotation of the hand, by a curvature movement (of parts) of the hand. In other words, the movement of at least parts of the hand along the depth axis includes not only a movement of the entire hand, but (any) movement of the hand. For example, when the hand is curved, parts of the hand are moved along the depth axis (as well as orthogonally to it), while other parts remain rigid. In a rotation, the entire hand (apart from the rotation axis) is moved along the depth axis (in motion around the rotation axis) and the lateral plane. The rotation axis may correspond to the natural rotation axis of the hand (i.e. the hand is rotated by rotation of the wrist and/or upper arm). The same holds true for the further hand. For example, the method may comprise determining 170 a movement of the further hand based on the three-dimensional distance information of the distance between the further hand and the distance sensor. The movement of the further hand may be determined similar to the movement of the hand.

For example, the method may comprise determining 132 a movement of the hand orthogonal to the depth axis between the distance sensor and the hand. In embodiments, it is assumed that the projection device and the distance sensor are arranged in close proximity, so that the depth axis between the distance sensor and the hand substantially corresponds to the depth axis between the projection device and the hand. In other words, the "depth axis between the distance sensor and the hand" may also be interpreted as "depth axis between the projection device and the hand". For example, the depth axis may be an axis that forms the center of the projection of the user interface. The movement of the hand orthogonal to the depth axis may be defined as a lateral movement, i.e. a movement that is not in parallel to the depth axis, but orthogonal to it. The movement of the hand orthogonal to the depth axis may occur on the lateral plane (a x/y-plane) that spans orthogonal to the depth axis. The movement of the hand orthogonal to the depth axis may correspond to a movement of the (entire) hand on the lateral plane. For example, the movement of the hand orthogonal to the depth axis may be determined by tracking the hand within the three-dimensional distance information, i.e. by tracking a movement of the entire hand on the lateral plane.

In some embodiments, determining the movement of at least parts of the hand may comprise determining 134 a rotational or curvature movement of at least parts of the hand. Different approaches may be chosen. For example, determining the rotational or curvature motion may involve tracking a distance of a plurality of portions of the hand to detect a rotational or curvature motion of the plurality of motions (such as about an axis of rotation or relative to a base of the hand). For example, a three-dimensional distance value may be determined for each section. Over several points in time, the respective three-dimensional distance value may be compared with the corresponding distance value of a previous point in time in order to determine a difference between the distance values. Based on this, a calculation may be performed to determine whether the three-dimensional distance values change in a way caused by rotation or curvature of the hand (or caused by movement of the entire hand along one of the axes). Alternatively, a plane may be formed over the plurality of distance values (e.g. by interpolation), and the rotation of the hand may be determined by detecting a change in the position of the plane. The plane may be divided into several portions of the plane. If a position or orientation of the portion of the plane changes, a curvature movement may be determined. Alternatively, the plurality of distance values may be used as input values for a neural network (i.e. a machine-learning model), wherein the neural network is trained to determine the rotational movement and/or curvature movement of the hand based on distance values.

In addition or as an alternative to rotation and/or curvature, a movement of the entire hand along the depth axis may also be determined, such as an up or down movement of the hand (if the distance sensor is located below or above the hand). In other words, determining 130 the movement of at least portions of the hand may comprise determining 136 a movement of the entire hand along the depth axis, e.g. the depth axis between the hand and the distance sensor or between the hand and the projection device. For example, an average value of the plurality of distance values may be calculated. The movement of the entire hand along the depth axis may be determined based on the average value of the plurality of distance values. For example, the movement of the entire hand along the depth axis along the depth axis may be registered (i.e. taken into account) if it exceeds a distance threshold value within a specified period of time (e.g. more than 1 cm within 0.5 s). In addition, the movement of the entire hand along the depth axis along the depth axis may be registered (i.e. taken into account) if there is no (or only a small) rotational movement and/or no (or only a small) curvature movement.

The method comprises controlling 140 the user interface based on the movement of at least parts of the hand. The user interface may be controlled based on the movement orthogonal to the depth axis, based on rotational or curvature movement and/or based on the movement of the entire hand along the depth axis. Additionally, the controlling 140 of the user interface may further be based on the movement of the further hand. For example, the method may comprise providing 140a a control signal to the user interface to effect the controlling of the user interface. The user interface may, for example, be generated by an operating system of the processing module. The control signal may be provided to and interpreted by the operating system. The user interface may be controlled based on the control signal. In order to visualize the controlling of the user interface, a corresponding visual representation of the user interface may be generated, which is projected onto the user's hand via the projection device. To achieve this, the display signal may be generated based on the controlling of the user interface and the display signal may be provided to the projection device. The projection device may be a projector such as a video projector such as an LCD-based projector (Liquid Crystal Display) or a DLP-based projector (Digital Light Processing). The projection device may be compact. Accordingly, the projection device may be a mini projector or a pico projector. For example, the projector may be a narrow-field projector, and the projection may be projected on the hand via a rotatable mirror, or the projector may be a wide-angle projector and areas outside the projection of the user interface may be blacked out.

The controlling of the user interface may be visualized through the user interface. The user interface may include one or more descriptions (i.e. labels), one or more graphical elements, one or more choices, one or more selection fields and/or one or more visual indicators. For example, choices may be visualized as text or in the form of icons (i.e. pictograms). Descriptions may be visualized as text. Visual indicators, such as selection fields, may be visualized by colored frames or by frames highlighted by their light intensity. The selection of a choice may be visualized by a selection field in the user interface. The visualizations may be displayed by the projection of the user interface on the hand.

In the following it is shown the particular movement may be used to control the user interface. It may be assumed that the movement is converted into a control instruction (of the control signal) for the user interface, i.e. an abstract movement is processed and the control instruction is generated based on the movement (possibly context-dependent). Both the movements and the effects on the user interface are described abstractly, but it should always be understood that the respective movement is detected, a corresponding control instruction based on the detected movement is generated, this control instruction being suitable for controlling the user interface accordingly.

For example, the user interface may be controlled based on the movement of the hand orthogonal to the depth axis (i.e. the movement of the hand in the lateral plane). For example, the movement of the hand in the lateral plane to move a first item of the user interface relative to one or more second items, e.g. by either keeping the first item at a fixed position relative to the hand (i.e. hand-fixed) and the one or more second items at a fixed position relative to a global coordinate space (e.g. world-fixed or coordinate system-fixed), or by keeping the first item at a fixed position relative to the global coordinate space and the one or more second items at a fixed position relative to the hand. Such a paradigm may be used to select one of a plurality of choices. In other words, the movement of the hand orthogonal to the depth axis may be used to select one of a plurality of choices.

For example, the first item may be a selection field and the one or more second items may be a plurality of choices. The selection of the choice may be visualized by a selection field in the user interface. In a first embodiment, the first item (i.e. the selection field) is kept at a fixed (i.e. constant) position relative to the hand and the one or more second items (i.e. the plurality of choices) are kept at a fixed position relative to a global coordinate space. The movement of the hand orthogonal to the depth axis may control the user interface such (i.e. may effect the controlling of the user interface such) that the selection field is shifted in accordance with the movement of the hand, so that a position of the selection field on the hand remains substantially constant (i.e. so that the position of the selection field is fixed relative to the hand) and the selection field shifts relative to the plurality of choices (while the plurality of choices remain fixed relative to a global coordinate system). In a second embodiment, the first item (i.e. the selection field) is kept at a fixed position relative to the global coordinate system and the one or more second items (i.e. the plurality of choices) are kept at a fixed position relative to the hand. The movement of the hand orthogonal to the depth axis may control the user interface such (i.e. may effect the controlling of the user interface such) that the plurality of choices are shifted according to the movement of the hand so that a position of the plurality of choices on the hand remains substantially constant (i.e. so that the position of the selection field is fixed relative to the hand) and the plurality of choices are shifted relative to the selection field (while the selection field remains fixed relative to a global coordinate system). In this context, "substantially constant" means that the position of the selection field or of the plurality of choices is moved less than 1 cm relative to the hand. In general, the selection field may be a "magnetic" selection field, i.e. the selection field may remain with one choice of the plurality of choices until a threshold is crossed, after which the selection field crosses over to the next choice. Alternatively, a linear movement of the selection field may be used. At an edge of the user interface, the selection field might e.g. bounce back or be compressed to indicate the edge of the user interface (an affordance for indicating the limits of the user interface to the user).

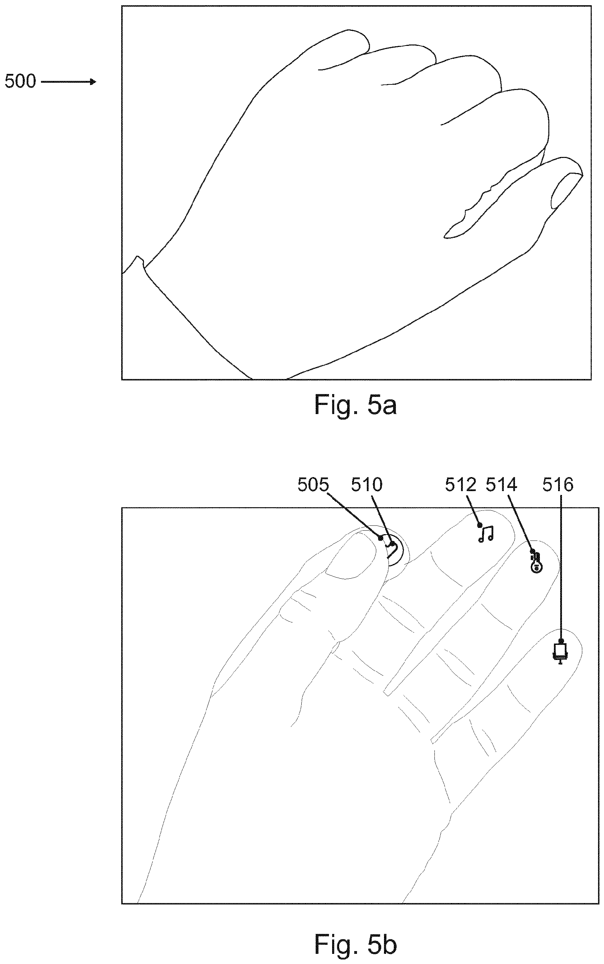

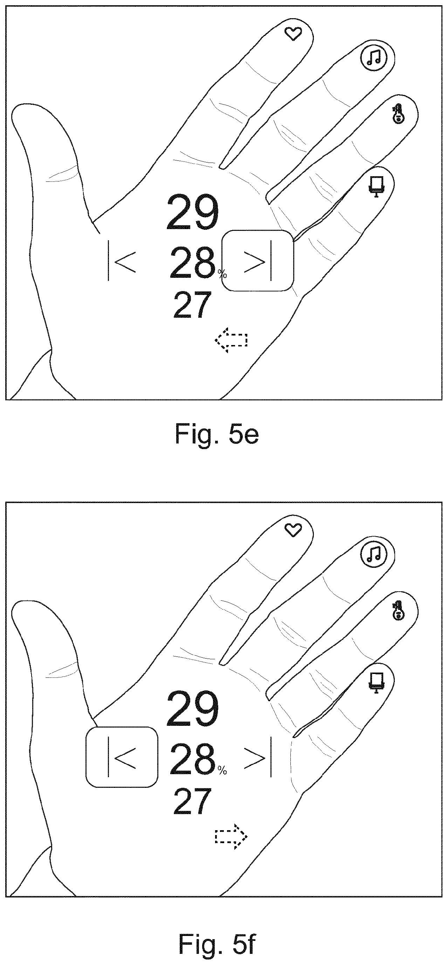

For example, the curvature or rotation movement of the hand may be used to control the user interface. By bending or rotating the hand, a choice may be made from a variety of choices. For example, a curvature of a finger, for example, may be used to control the user interface. For example, as shown in Figs. 5b through 5i, at least two choices of the user interface may be projected onto at least two fingers. For example, the at least two choices may be projected onto at least two fingers of the group of an index finger, a middle finger, a ring finger and a small finger. One of at least two choices may be selected if the corresponding finger is bent (i.e. if a curvature of the corresponding finger has been determined via the three-dimensional distance information). The choice may be selected, for example, if the bending of the corresponding finger exceeds a predefined degree of curvature. Alternatively (or additionally) one of the at least two choices may be selected if the corresponding finger is touched by another finger on which no choice is projected, e.g. another finger of the same hand (e.g. the thumb) or a finger of the further hand. If the choice is deemed selected, this may be indicated by a visual indication, e.g. by highlighting the corresponding choice in the projection of the user interface. A choice may be highlighted using bigger fonts, brighter or different colors, a higher color intensity, an animation, and/or a border surrounding the choice (or a combination thereof). This visual indication may also be used in other embodiments.

In some embodiments, the user interface may be controlled based on the movement of the entire hand along (i.e. substantially parallel to) the depth axis. For example, by moving the entire hand along the depth axis in the direction of the distance sensor, an element of the user interface may be activated, e.g. a selection may be confirmed. For example, a selection may be confirmed by thrusting the hand upwards along the depth axis (e.g. in the direction of the distance sensor). Alternatively or additionally, by moving the entire hand along the depth axis in the direction of the distance sensor, an element of the user interface may be changed, such as a selection of the plurality of choices, or a numeric value may be changed gradually or according to a specified interval (depending on the distance of the entire hand from the distance sensor).

In addition to the position of the hand to select options, predefined gestures may also be used to perform predefined actions, such as activating or deactivating the user interface. One way is to detect whether the inside or outside of the hand is turned upwards. In other words, the method may comprise determining 150 whether a palm or a back of the hand faces the distance sensor. The method may comprise activating 154 the user interface if the palm is brought to face the distance sensor by a rotational movement of the hand. The method may comprise deactivating 156 the user interface if the back of the hand is brought to face the distance sensor by a rotational movement of the hand. Alternatively or additionally, the activation/deactivation may be based on whether the hand is opened or closed. The method may comprise detecting 152 whether the hand is opened or closed based on the movement of at least parts of the hand. The method may comprise activating 154 the user interface if the hand being opened is detected and deactivating 156 the user interface if the hand being closed is detected.

The method may further comprise providing 160 an acoustic feedback based on the controlling of the user interface (e.g. via an acoustic output device), e.g. by providing an audio signal to the acoustic output device. Accordingly, the at least one interface 12 may be coupled to an acoustic output device, i.e. the system may comprise the acoustic output device. The acoustic feedback may, for example, take place each time the user interface is controlled, or (only) when a choice is selected or confirmed. For example, a (discreet) acoustic hint may be output.

As already mentioned above, in some embodiments, instead of projecting the user interface onto the hand of the user, and determining the three-dimensional distance information for the hand, another body part may be used. Accordingly, in more general terms, the method may comprise projecting a user interface onto a body part of a user. The method may comprise determining three-dimensional distance information of a distance between the body part and a distance sensor. The method may comprise determining a movement of at least parts of the body part based on the three-dimensional distance information. The method may comprise controlling the user interface based on the movement of at least parts of the body part. For example, the body part may be an arm (e.g. a forearm) or a leg or shank of the user. Additional aspects that were previously described in connection with the hand of the user, may also be applied more generally to the body part of the user, e.g. the arm (e.g. a forearm) or a leg or shank of the user.

The at least one interface 12 may correspond to one or more inputs and/or outputs for receiving and/or transmitting information, which may be in digital (bit) values according to a specified code, within a module, between modules or between modules of different entities. For example, the at least one interface 12 may comprise interface circuitry configured to receive and/or transmit information.

In embodiments the processing module 14 may be implemented using one or more processing units, one or more processing devices, any means for processing, such as a processor, a computer or a programmable hardware component being operable with accordingly adapted software. In other words, the described function of the processing module 14 may as well be implemented in software, which is then executed on one or more programmable hardware components. Such hardware components may comprise a general purpose processor, a Digital Signal Processor (DSP), a micro-controller, etc.

Embodiments of the present disclosure provide a protected User Interface (UI). The projected user interface may be targeted for use in a vehicle, e.g. by for rear seat passengers or in public transportation vehicles, but is not limited for such use. For example, the projected user interface may be used in architecture, such as buildings, homes, offices, restaurants etc.) In at least some embodiments, the projected UI might comprise no physical UI / mechatronics. By projecting the user interface onto the hand, the user interface may be at hand, an inspiring, intuitive and modern UI and may feature one-handed controllability. In addition, state of the art illumination of the space may be used.

As the user interface is projected onto a hand, in at least some embodiments, the projection may follow the hand. This can either be achieved by (physically) adjusting a direction of a narrow-angle projection being output from a projector, as shown in Fig. 2a, or by using a wide-angle projection which is only partially used, as shown in Fig. 2b.

Figs. 2a and 2b show schematic diagrams of embodiments of a projection device for projecting a user interface. In Fig. 2a, a smaller projector (i.e. projection device) 16 is used (e.g. a narrow-angle projector), together with a x/y rotatable mirror 210, to enable multiple projection areas 220; 230 for different positions of the hand 200, which can be used by rotating the mirror 210. Such an embodiment is based on a smaller projector with complex mechanics, complex mapping software and a small parallel projection field. A sensor (e.g. a distance sensor) 18 is used to track the movement of the hand 200. The projection user interface (the sun icon) follows the movement of the hand 200 digitally (pixel-based) and mechanically (mirror-based).

In Fig. 2b, a wide-angle projector 16 is used to create a larger projection field 240, which might only be partially used at a position of the hand 200. Such an embodiment might require no mechanics, as it follows the hand (only) digitally (pixel-based), and might use simpler mapping software. Due to the large projection field, a larger projector (for the same brightness) may be required, and a lower resolution may be achieved. Again, a sensor (e.g. a distance sensor) 18 is used to track the movement of the hand 200.

Various functionality may be controlled and/or shown via the user interface. For example, in an entertainment section of the user interface, a genre may be selected, a volume may be changed or tracks may be skipped. In a navigation section, an estimated time of arrival may be shown. In a climate control section, a temperature may be adjusted. In a fragrance section, a type and intensity of the fragrance may be adjusted. In a seat adjustment section, a back rest angle and a seat position may be adjusted. In a light section, a reading light or an ambient light may be activated or adjusted. The sections entertainment, navigation, climate control, fragrance, seat adjustment and light may also be controlled indirectly via a mood section, in which a mood or intensity may be selected. In a communication section, a call may be accepted or rejected, or a recent contact may be selected.

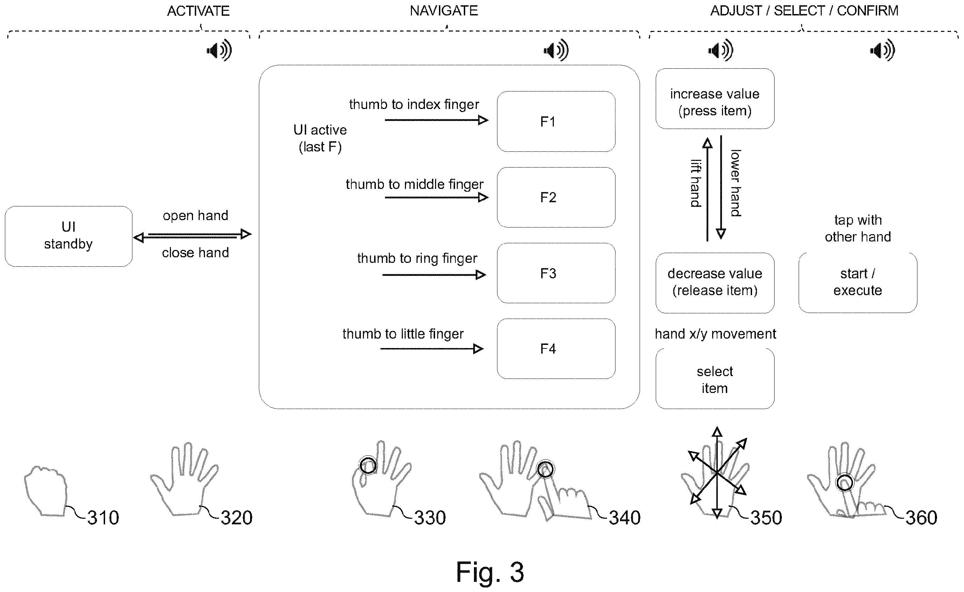

Fig. 3 shows an overview of a hand movement-based control of a user interface. In Fig. 3, a user-initiated user interface is shown. When the hand is closed 310, the user interface is in a standby state. To activate user interface, the hand may be opened 320, to deactivate the user interface, the hand may be closed 310. After the hand being opened or closed is detected, an acoustic feedback may be provided. Once the hand is open, it may be used to navigate among the sections (e.g. among choices of a plurality of choices), where the last functionality or a context-specific functionality (such as changing volume after the music changes substantially, accessing navigation in case of a traffic jam etc.) may pre-selected after activation. The choices may be projected on different fingers of the hand, and they may be activated by bending the respective finger, touching the finger with the thumb of the same hand 330 or touching the finger with a finger of another hand 340. For example, as shown in Fig. 3, by touching the index finger with the thumb, function F1 may be selected, by touching the middle finger with the thumb, function F2 may be selected, by touching the ring finger with the thumb, function F3 may be selected, and by touching the little finger with the thumb, function F4 may be selected. Upon selection of a function, an acoustic feedback may be provided. Once a function is selected, a movement 350 of the hand along the x-,y- or z-axis may be used to adjust a setting, select a choice or confirm a setting or choice. For example, by lifting the hand (a movement along the z-axis/depth-axis) a value may be increased or an item may be pressed, by lowering the hand (along the z-axis/depth-axis) the value may be decreased or the item may be released. By performing an x/y-movement (i.e. orthogonal to the z-axis/depth axis), an item may be selected. By tapping an item with the other hand 360, an item may be started/executed. After each performed action, an acoustic feedback may be provided.

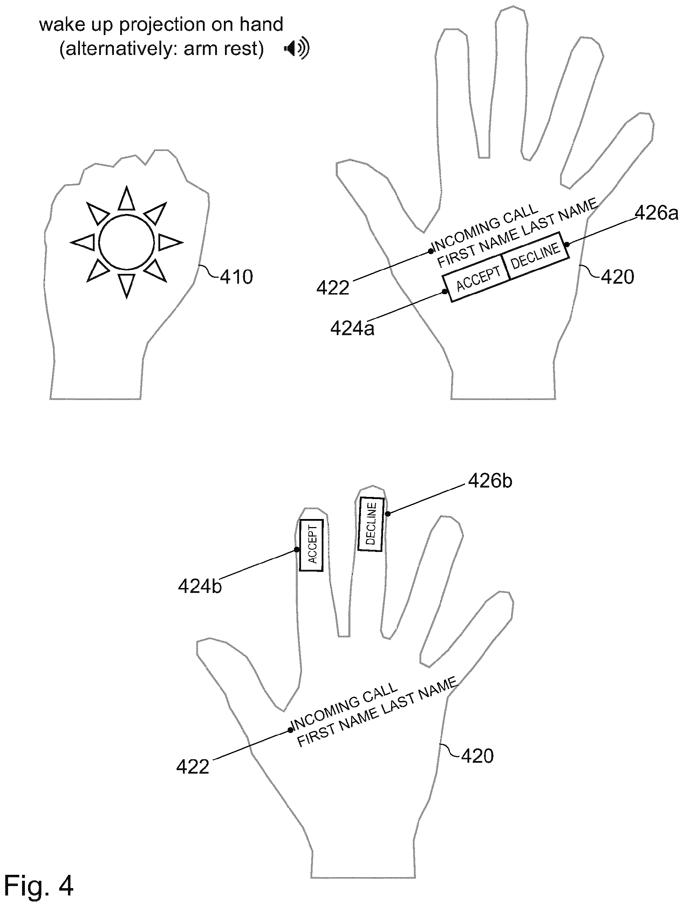

Fig. 4 shows a schematic diagram of an activation of a user interface. This is an example of a system-initiated UI/notification. To notify the user, a symbol (e.g. a pictogram or an animation, such as sparkling particles) may be projected on the closed hand/back side of the hand (or alternatively on the arm rest). For example, if the symbol is projected is somewhere apart from the hand, such as a desk or an armrest, any user may move his/her hand to the projection of the symbol, thereby taking control of the user interface. Additionally, an acoustic notification may be provided. After opening the hand 420, a description of the event ("incoming call / first name last name") 422 and options that are available (accept 424a/424b and decline 426a/426b) may be projected on the palm of the hand (424a/426a) or on two fingers (424b/426b).

Figs. 5a to 5j show schematic drawings of a hand movement-based control of a user interface. In the following, various states of the user interface are shown. In each figure, as exemplarily illustrated in Fig. 5a, on the left it is indicated 505 whether the hand is closed (left symbol has solid lines) or opened (right symbol has solid lines). On the right, the projection of the user interface is shown 500. In Fig. 5a, the hand is closed, which deactivates the user interface. By opening the hand, the user interface is activated on the hand (as seen in figs 5b to 5i).

In Fig. 5b, a plurality of choices 510 to 514 are projected on the fingers of the hand (starting from the index finger to the little finger: Favorites, Entertainment, Climate Control and Seat Adjustment). In the example of Fig. 5b, the section favorites is selected by touching the index finger with the thumb. The different sections/domains are indicated by icons. Icons, for example for different domains can be projected on the hand, for example on the fingertips. They can be selected by touching the icons on the fingertips with the thumb (or a finger of the other hand).

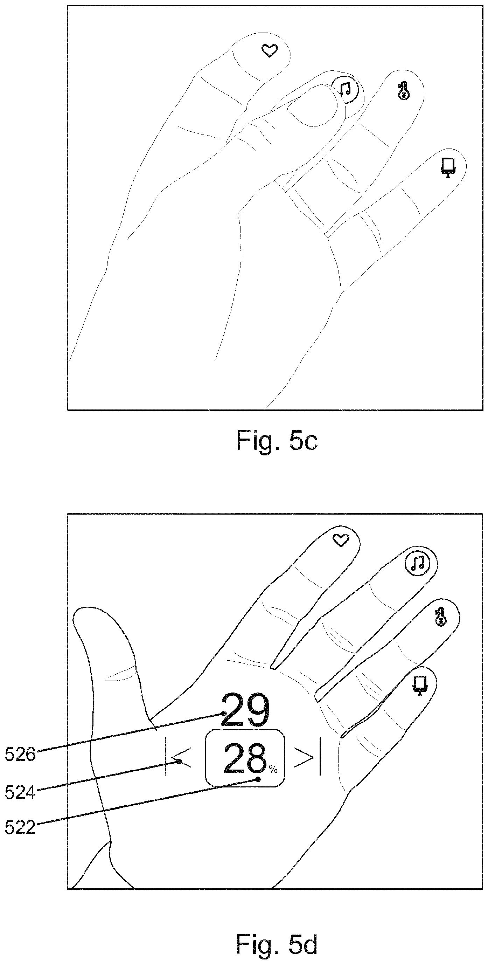

In Fig. 5c, the entertainment section is selected by touching the middle finger with the thumb.

In Fig. 5d, a plurality of choices of the entertainment section are shown, e.g. volume 526 or skip track 524. A currently selected choice is highlighted by selection field 522. Selecting several items or buttons (i.e. choices) can be achieved with a horizontal movement, for example sideways (as shown) or front and back. In this case, a "magnetic snap cursor" (the selection field 522) may be absolutely fixated to the coordinate system and the UI items may be fixated to the hand moved across the UI item. In the shown example, the cursor "snaps" on one of the three items (skip forward, volume, skip backward). For example, in Fig. 5e, the hand is moved to the left, so the items/choices move to the left, and the selection field remains fixed to the coordinate system. In Fig. Sg, the hand is moved to the right, choices/items move to the right, and selection field remains fixed to the coordinate system. Alternatively, a 2D movement in x/y direction can be done to achieve a "non-snappy", smooth mouse cursor like control. Confirming a selection (like a "click") can be done with vertical movement. Alternatively, all UI items can be touched, shifted, selected and clicked like on a touchscreen with a finger of the other hand. Every action can be supported by a unique sound, so-called earcons.

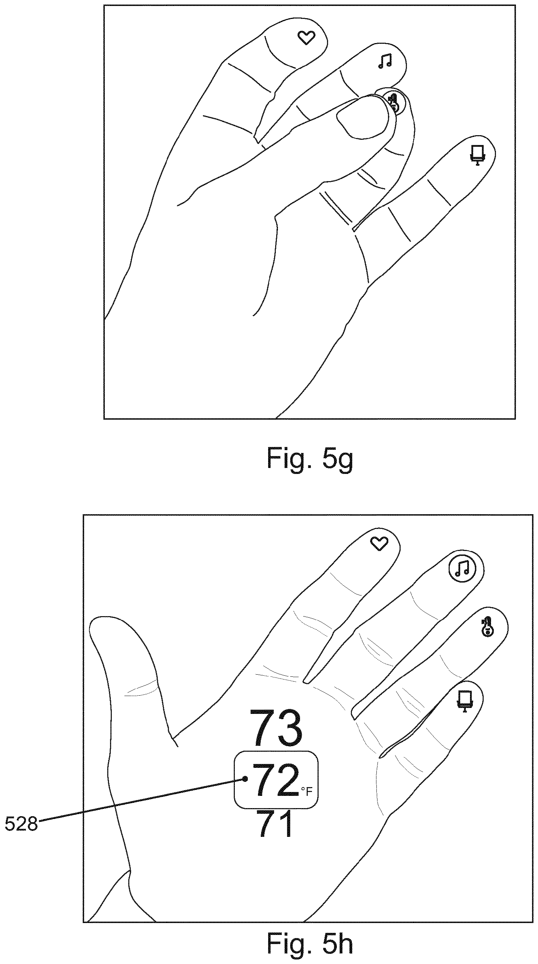

In Fig. 5g, the climate control section selected by touching the ring finger with the thumb. In the climate control section, in Fig. 5h, the selection field 528 is shown over the plurality of choices representing different temperatures. For adjusting a value displayed on the hand, a vertical hand movement can be executed. Visual hints, for example a scale, can be projected on the hand for discoverability and affordability.

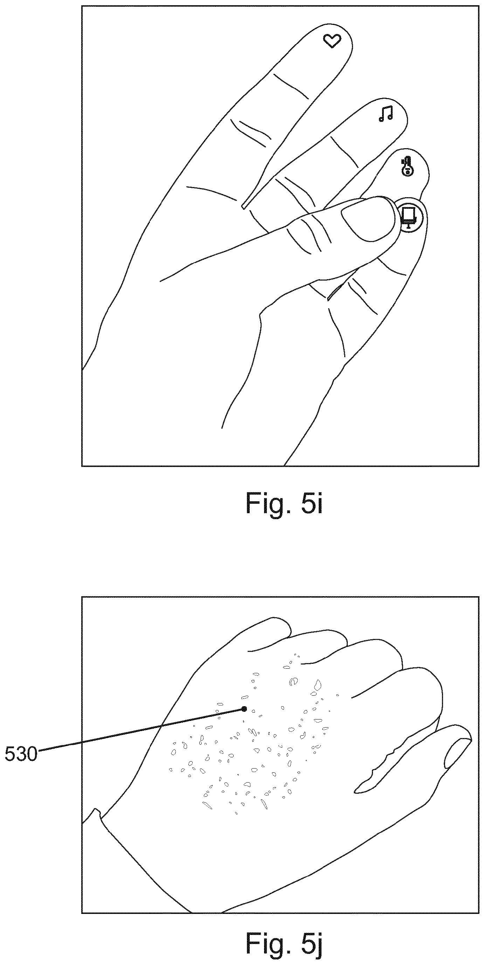

In Fig. 5i, the seat adjustment section is selected by touching the little finger with the thumb.

Fig. 5j shows an indication of availability, e.g. a notification, on the closed hand. Hints (visual, acoustical) can provide UI discoverability and affordability.

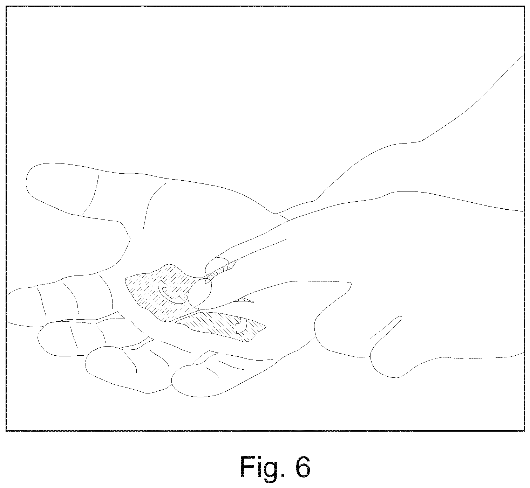

Fig. 6 shows a further schematic drawing of a hand movement-based control of a user interface. In Fig 6, a call notification is projected onto the hand, comprising a projection of a red receiver and a projection of a green receiver, which may be selected by tapping on them with the other hand.

More details and aspects of the projected user interface or the controlling of the projected user interface are mentioned in connection with the proposed concept or one or more examples described above (e.g. Fig. 1a to 1d). The projected user interface or the controlling of the projected user interface may comprise one or more additional optional features corresponding to one or more aspects of the proposed concept or one or more examples described above or below.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for illustrative purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to s.th.", such as a device or a circuit configured to the respective task.

Functions of various elements shown in the figures, including any functional blocks labeled as "means", "means for providing a signal", "means for generating a signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

## Claims

1. A method for controlling a user interface, the method comprising:
Projecting (110) a user interface onto a hand of a user;
Determining (120) three-dimensional distance information of a distance between the hand and a distance sensor;
Determining (130) a movement of at least parts of the hand based on the three-dimensional distance information, wherein determining the movement of at least parts of the hand comprises determining (134) a rotational movement of the hand around a rotation axis of the hand when the hand is rotated by rotation of the wrist and/or upper arm; and
Controlling (140) the user interface based on the movement of at least parts of the hand, wherein the user interface is controlled based on the rotational movement.

2. The method according to claim 1, the method comprising determining (132) a movement of the hand orthogonal to a depth axis between the distance sensor and the hand, wherein the user interface is controlled based on the movement of the hand orthogonal to the depth axis.

3. The method according to claim 2, wherein the movement of the hand orthogonal to the depth axis is used to select one of a plurality of choices.

4. The method according to claim 3, wherein the selection of the choice is visualized by a selection field in the user interface, wherein the movement of the hand orthogonal to the depth axis controls the user interface such that the selection field is shifted in accordance with the movement of the hand so that a position of the selection field on the hand remains substantially constant and the selection field shifts relative to the plurality of choices.

5. The method according to claim 3, wherein the selection of the choice is visualized by a selection field in the user interface, wherein the movement of the hand orthogonal to the depth axis controls the user interface such that the plurality of choices are shifted according to the movement of the hand so that a position of the plurality of choices on the hand remains substantially constant and the plurality of choices are shifted relative to the selection field.

6. The method according to one of the claims 1 to 3, wherein determining the movement of at least parts of the hand comprises determining (134) a curvature movement of at least parts of the hand, wherein the user interface is controlled based on the curvature movement.

7. The method according to claim 6, where at least two choices of the user interface are projected (110) onto at least two fingers, wherein one of the at least two choices is selected if the corresponding finger is bent.

8. The method according to claim 6, wherein one of the at least two choices is selected if the corresponding finger is touched by another finger on which no choice is projected.

9. The method according to one of the claims 1 to 8, wherein determining (130) the movement of at least portions of the hand comprises determining (136) a movement of the entire hand along a depth axis between the hand and the distance sensor, wherein the user interface is controlled based on the movement of the entire hand along the depth axis.

10. The method according to claim 9, wherein a movement of the entire hand along the depth axis in the direction of the distance sensor changes or activates an element of the user interface.

11. The method according to one of the claims 1 to 10, wherein determining (120) the three-dimensional distance information further comprises determining three-dimensional distance information of a distance between a further hand and the distance sensor, wherein the method comprises determining (170) a movement of the further hand based on the three-dimensional distance information of the distance between the further hand and the distance sensor, wherein the controlling (140) of the user interface is further based on the movement of the further hand.

12. The method according to one of the claims 1 to 11, wherein the three-dimensional distance information of the distance between the hand and the distance sensor comprises a plurality of distance values for different portions of the hand, wherein the movement of at least parts of the hand is determined (130) based on the plurality of distance values.

13. The method according to one of the claims 1 to 12 further comprising providing (160) an acoustic feedback based on the controlling of the user interface.

14. The method according to one of the claims 1 to 13, the method comprising providing (140a) a control signal to the user interface to effect the controlling of the user interface, wherein the controlling of the user interface is visualized by the user interface.

15. The method according to claim 1, the method comprising determining (150) whether a palm or a back of the hand faces the distance sensor, and activating (154) the user interface if the palm is brought to face the distance sensor by a rotational movement of the hand, and/or wherein the method comprises detecting (152) whether the hand is opened or closed based on the movement of at least parts of the hand, wherein the method comprises activating (154) the user interface if the hand being opened is detected and deactivating (156) the user interface if the hand being closed is detected.

16. The method according to one of the claims 1 to 15, wherein the method further comprises providing (1 10a) a display signal to a projection device to cause the projection of the user interface onto the hand of a user, receiving (120a) a distance measurement signal from a distance sensor, wherein the three-dimensional distance information of the distance between the hand and the distance sensor is determined (120) based on the distance measurement signal, and providing (140a) a control signal to the user interface to effect the controlling of the user interface based on the movement of at least parts of the hand.

17. A computer program having a program code for performing the method of claim 16, when the computer program is executed on a computer, a processor, or a programmable hardware component.

18. An apparatus (10) for controlling a user interface (20), the apparatus (10) comprising:
at least one interface (12) for communicating with a projection device (16) and with a distance sensor (18); and
a processing module (14) configured to:
provide a display signal to the projection device (16) to cause a projection of the user interface onto a hand of a user,
receive a distance measurement signal from the distance sensor (18),
determine three-dimensional distance information of a distance between the hand and the distance sensor based on the distance measurement signal,
determine a movement of at least parts of the hand based on the three-dimensional distance information, wherein determining the movement of at least parts of the hand comprises determining a rotational movement of the hand around a rotation axis of the hand when the hand is rotated by rotation of the wrist and/or upper arm, and
Provide a control signal to the user interface to effect the controlling of the user interface based on the movement of at least parts of the hand, wherein the user interface is controlled based on the rotational movement.

## Patentansprüche

1. Verfahren zur Steuerung einer Benutzerschnittstelle, wobei das Verfahren Folgendes umfasst:
Projizieren (110) einer Benutzerschnittstelle auf die Hand eines Benutzers;
Bestimmen (120) von dreidimensionalen Abstandsinformationen eines Abstands zwischen der Hand und einem Abstandssensor;
Bestimmen (130) einer Bewegung von zumindest Teilen der Hand auf der Grundlage der dreidimensionalen Abstandsinformationen, wobei das Bestimmen der Bewegung von zumindest Teilen der Hand das Bestimmen (134) einer Drehbewegung der Hand um eine Drehachse der Hand umfasst, wenn die Hand durch Drehung des Handgelenks und/oder des Oberarms gedreht wird; und
Steuern (140) der Benutzerschnittstelle basierend auf der Bewegung von zumindest Teilen der Hand, wobei die Benutzerschnittstelle basierend auf der Drehbewegung gesteuert wird.

2. Verfahren nach Anspruch 1, wobei das Verfahren das Bestimmen (132) einer Bewegung der Hand orthogonal zu einer Tiefenachse zwischen dem Abstandssensor und der Hand umfasst, wobei die Benutzerschnittstelle auf der Grundlage der Bewegung der Hand orthogonal zu der Tiefenachse gesteuert wird.

3. Verfahren nach Anspruch 2, bei dem die Bewegung der Hand orthogonal zur Tiefenachse dazu verwendet wird, eine von einer Vielzahl von Auswahlmöglichkeiten auszuwählen.

4. Verfahren nach Anspruch 3, wobei die Auswahl der Auswahlmöglichkeit durch ein Auswahlfeld in der Benutzerschnittstelle visualisiert wird, wobei die Bewegung der Hand orthogonal zur Tiefenachse die Benutzerschnittstelle so steuert, dass das Auswahlfeld in Übereinstimmung mit der Bewegung der Hand verschoben wird, so dass eine Position des Auswahlfelds auf der Hand im Wesentlichen konstant bleibt und das Auswahlfeld sich relativ zu der Vielzahl von Auswahlmöglichkeiten verschiebt.

5. Verfahren nach Anspruch 3, wobei die Auswahl der Auswahlmöglichkeit durch ein Auswahlfeld in der Benutzerschnittstelle visualisiert wird, wobei die Bewegung der Hand orthogonal zur Tiefenachse die Benutzerschnittstelle so steuert, dass die Vielzahl der Auswahlmöglichkeiten entsprechend der Bewegung der Hand so verschoben wird, dass eine Position der Vielzahl der Auswahlmöglichkeiten auf der Hand im Wesentlichen konstant bleibt und die Vielzahl der Auswahlmöglichkeiten relativ zum Auswahlfeld verschoben wird.

6. Verfahren nach einem der Ansprüche 1 bis 3, wobei das Bestimmen der Bewegung von zumindest Teilen der Hand das Bestimmen (134) einer Krümmungsbewegung von zumindest Teilen der Hand umfasst, wobei die Benutzerschnittstelle auf der Grundlage der Krümmungsbewegung gesteuert wird.

7. Verfahren nach Anspruch 6, bei dem mindestens zwei Auswahlmöglichkeiten der Benutzeroberfläche auf mindestens zwei Finger projiziert (110) werden, wobei eine der mindestens zwei Auswahlmöglichkeiten ausgewählt wird, wenn der entsprechende Finger gebogen wird.

8. Verfahren nach Anspruch 6, wobei eine der mindestens zwei Auswahlmöglichkeiten ausgewählt wird, wenn der entsprechende Finger von einem anderen Finger berührt wird, auf den keine Auswahlmöglichkeit projiziert wird.

9. Verfahren nach einem der Ansprüche 1 bis 8, wobei das Bestimmen (130) der Bewegung zumindest von Teilen der Hand das Bestimmen (136) einer Bewegung der gesamten Hand entlang einer Tiefenachse zwischen der Hand und dem Abstandssensor umfasst, wobei die Benutzerschnittstelle basierend auf der Bewegung der gesamten Hand entlang der Tiefenachse gesteuert wird.

10. Verfahren nach Anspruch 9, wobei eine Bewegung der gesamten Hand entlang der Tiefenachse in Richtung des Abstandssensors ein Element der Benutzerschnittstelle verändert oder aktiviert.

11. Verfahren nach einem der Ansprüche 1 bis 10, wobei das Bestimmen (120) der dreidimensionalen Abstandsinformationen ferner das Bestimmen von dreidimensionalen Abstandsinformationen eines Abstands zwischen einer weiteren Hand und dem Abstandssensor umfasst, wobei das Verfahren das Bestimmen (170) einer Bewegung der weiteren Hand basierend auf den dreidimensionalen Abstandsinformationen des Abstands zwischen der weiteren Hand und dem Abstandssensor umfasst, wobei die Steuerung (140) der Benutzerschnittstelle ferner auf der Bewegung der weiteren Hand basiert.

12. Verfahren nach einem der Ansprüche 1 bis 11, wobei die dreidimensionalen Abstandsinformationen des Abstands zwischen der Hand und dem Abstandssensor eine Vielzahl von Abstandswerten für unterschiedliche Abschnitte der Hand umfasst, wobei die Bewegung zumindest von Teilen der Hand auf der Basis der Vielzahl von Abstandswerten bestimmt wird (130).

13. Verfahren nach einem der Ansprüche 1 bis 12, das ferner die Bereitstellung (160) einer akustischen Rückmeldung auf der Grundlage der Steuerung der Benutzerschnittstelle umfasst.

14. Verfahren nach einem der Ansprüche 1 bis 13, wobei das Verfahren die Bereitstellung (140a) eines Steuersignals an die Benutzerschnittstelle umfasst, um die Steuerung der Benutzerschnittstelle zu bewirken, wobei die Steuerung der Benutzerschnittstelle durch die Benutzerschnittstelle visualisiert wird.

15. Verfahren nach Anspruch 1, wobei das Verfahren das Bestimmen (150), ob eine Handfläche oder ein Handrücken dem Abstandssensor zugewandt ist, und das Aktivieren (154) der Benutzerschnittstelle umfasst, wenn die Handfläche durch eine Drehbewegung der Hand dem Abstandssensor zugewandt wird, und/oder wobei das Verfahren das Erkennen (152), ob die Hand geöffnet oder geschlossen ist, auf der Grundlage der Bewegung zumindest von Teilen der Hand umfasst, wobei das Verfahren das Aktivieren (154) der Benutzerschnittstelle umfasst, wenn erkannt wird, dass die Hand geöffnet ist, und das Deaktivieren (156) der Benutzerschnittstelle, wenn erkannt wird, dass die Hand geschlossen ist.

16. Verfahren nach einem der Ansprüche 1 bis 15, wobei das Verfahren ferner umfasst: Bereitstellen (110a) eines Anzeigesignals an eine Projektionsvorrichtung, um die Projektion der Benutzerschnittstelle auf die Hand eines Benutzers zu bewirken, Empfangen (120a) eines Abstandsmesssignals von einem Abstandssensor, wobei die dreidimensionalen Abstandsinformationen des Abstands zwischen der Hand und dem Abstandssensor auf der Grundlage des Abstandsmesssignals bestimmt werden (120), und Bereitstellen (140a) eines Steuersignals an die Benutzerschnittstelle, um die Steuerung der Benutzerschnittstelle auf der Grundlage der Bewegung von zumindest Teilen der Hand zu bewirken.

17. Computerprogramm mit einem Programmcode zum Ausführen des Verfahrens nach Anspruch 16, wenn das Computerprogramm auf einem Computer, einem Prozessor oder einer programmierbaren Hardware-Komponente ausgeführt wird.

18. Vorrichtung (10) zur Steuerung einer Benutzerschnittstelle (20), wobei die Vorrichtung (10) Folgendes umfasst:
mindestens eine Schnittstelle (12) zur Kommunikation mit einer Projektionsvorrichtung (16) und mit einem Abstandssensor (18); und
ein Verarbeitungsmodul (14), das für Folgendes ausgebildet ist:
Bereitstellen eines Anzeigesignals für die Projektionsvorrichtung (16), um eine Projektion der Benutzerschnittstelle auf eine Hand eines Benutzers zu bewirken,
Empfangen eines Abstandsmesssignals von dem Abstandssensor (18),
Bestimmen dreidimensionaler Abstandsinformationen über den Abstand zwischen der Hand und dem Abstandssensor auf der Grundlage des Abstandsmesssignals,
Bestimmen einer Bewegung von zumindest Teilen der Hand auf der Grundlage der dreidimensionalen Abstandsinformationen, wobei das Bestimmen der Bewegung von zumindest Teilen der Hand das Bestimmen einer Drehbewegung der Hand um eine Drehachse der Hand umfasst, wenn die Hand durch Drehung des Handgelenks und/oder des Oberarms gedreht wird; und
Bereitstellen eines Steuersignals an die Benutzerschnittstelle, um die Steuerung der Benutzerschnittstelle basierend auf der Bewegung von zumindest Teilen der Hand zu bewirken, wobei die Benutzerschnittstelle basierend auf der Drehbewegung gesteuert wird.

## Revendications

1. Procédé pour commander une interface utilisateur, le procédé comprenant les étapes consistant à :
projeter (110) une interface utilisateur sur une main d'un utilisateur ;
déterminer (120) une information de distance tridimensionnelle d'une distance entre la main et un capteur de distance ;
déterminer (130) un mouvement d'au moins certaines parties de la main sur la base de l'information de distance tridimensionnelle, la détermination du mouvement d'au moins certaines parties de la main comprenant la détermination (134) d'un mouvement de rotation de la main autour d'un axe de rotation de la main lorsque la main tourne par rotation du poignet et/ou de l'avant-bras ; et
commander (140) l'interface utilisateur sur la base du mouvement d'au moins certaines parties de la main, l'interface utilisateur étant commandée sur la base du mouvement de rotation.

2. Procédé selon la revendication 1, le procédé comprenant la détermination (132) d'un mouvement de la main orthogonal à un axe de profondeur entre le capteur de distance et la main, l'interface utilisateur étant commandée sur la base du mouvement de la main orthogonal à l'axe de profondeur.

3. Procédé selon la revendication 2, dans lequel le mouvement de la main orthogonal à l'axe de profondeur est utilisé pour sélectionner un choix parmi une pluralité de choix.

4. Procédé selon la revendication 3, dans lequel la sélection du choix est visualisée par un champ de sélection dans l'interface utilisateur, dans lequel le mouvement de la main orthogonal à l'axe de profondeur commande l'interface utilisateur de telle façon que le champ de sélection se déplace en fonction du mouvement de la main afin qu'une position du champ de sélection sur la main reste sensiblement constante et que le champ de sélection se déplace par rapport à la pluralité de choix.

5. Procédé selon la revendication 3, dans lequel la sélection du choix est visualisée par un champ de sélection dans l'interface utilisateur, dans lequel le mouvement de la main orthogonal à l'axe de profondeur commande l'interface utilisateur de telle façon que la pluralité de choix se déplace en fonction du mouvement de la main afin qu'une position de la pluralité de choix sur la main reste sensiblement constante et que la pluralité de choix se déplace par rapport au champ de sélection.

6. Procédé selon l'une des revendications 1 à 3, dans lequel la détermination du mouvement d'au moins certaines parties de la main comprend la détermination (134) d'un mouvement de courbure d'au moins certaines parties de la main, dans lequel l'interface utilisateur est commandée sur la base du mouvement de courbure.

7. Procédé selon la revendication 6, dans lequel au moins deux choix de l'interface utilisateur sont projetés (110) sur au moins deux doigts, dans lequel un des au moins deux choix est sélectionné si le doigt correspondant est plié.

8. Procédé selon la revendication 6, dans lequel un des au moins deux choix est sélectionné si le doigt correspondant est touché par un autre doigt sur lequel aucun choix n'est projeté.

9. Procédé selon l'une des revendications 1 à 8, dans lequel la détermination (130) du mouvement d'au moins certaines parties de la main comprend la détermination (136) d'un mouvement de l'ensemble de la main le long d'un axe de profondeur entre la main et le capteur de distance, dans lequel l'interface utilisateur est commandée sur la base du mouvement de l'ensemble de la main le long de l'axe de profondeur.

10. Procédé selon la revendication 9, dans lequel un mouvement de l'ensemble de la main le long de l'axe de profondeur dans la direction du capteur de distance modifie ou active un élément de l'interface utilisateur.

11. Procédé selon l'une des revendications 1 à 10, dans lequel la détermination (120) de l'information de distance tridimensionnelle comprend également la détermination d'une information de distance tridimensionnelle d'une distance entre une autre main et le capteur de distance, le procédé comprenant la détermination (170) d'un mouvement de l'autre main sur la base de l'information de distance tridimensionnelle de la distance entre l'autre main et le capteur de distance, dans lequel la commande (140) de l'interface utilisateur s'effectue également sur la base du mouvement de l'autre main.

12. Procédé selon l'une des revendications 1 à 11, dans lequel l'information de distance tridimensionnelle de la distance entre la main et le capteur de distance comprend une pluralité de valeurs de distance relatives à différentes parties de la main, dans lequel le mouvement d'au moins certaines parties de la main est déterminé (130) sur la base de la pluralité de valeurs de distance.

13. Procédé selon l'une des revendications 1 à 12, comprenant également la fourniture (160) d'un retour acoustique sur la base de la commande de l'interface utilisateur.

14. Procédé selon l'une des revendications 1 à 13, le procédé comprenant la fourniture (140a) d'un signal de commande à l'interface utilisateur pour effectuer la commande de l'interface utilisateur, dans lequel la commande de l'interface utilisateur est visualisée par l'interface utilisateur.

15. Procédé selon la revendication 1, le procédé comprenant l'étape consistant à déterminer (150) si c'est la paume ou le dos de la main qui fait face au capteur de distance, et à activer (154) l'interface utilisateur si la paume est amenée face au capteur de distance par un mouvement de rotation de la main, et/ou le procédé comprenant l'étape consistant à déterminer (152) si la main est ouverte ou fermée sur la base du mouvement d'au moins certaines parties de la main, le procédé comprenant l'activation (154) de l'interface utilisateur s'il est détecté que la main est ouverte et la désactivation (156) de l'interface utilisateur s'il est détecté que la main est fermée.

16. Procédé selon l'une des revendications 1 à 15, le procédé comprenant également la fourniture (110a) d'un signal d'affichage à un dispositif de projection pour causer la projection de l'interface utilisateur sur la main d'un utilisateur, la réception (120a) d'un signal de mesure de distance en provenance d'un capteur de distance, l'information de distance tridimensionnelle de la distance entre la main et le capteur de distance étant déterminée (120) sur la base du signal de mesure de distance, et la fourniture (140a) d'un signal de commande à l'interface utilisateur pour effectuer la commande de l'interface utilisateur sur la base du mouvement d'au moins certaines parties de la main.

17. Programme d'ordinateur ayant un code de programme pour réaliser le procédé selon la revendication 16, lorsque le programme d'ordinateur s'exécute sur un ordinateur, un processeur ou un composant matériel programmable.

18. Appareil (10) pour commander une interface utilisateur (20), l'appareil (10) comprenant :
au moins une interface (12) pour communiquer avec un dispositif de projection (16) et avec un capteur de distance (18) ; et
un module de traitement (14), configuré pour :
fournir un signal d'affichage au dispositif de projection (16) pour causer une projection de l'interface utilisateur sur une main d'un utilisateur,
recevoir un signal de mesure de distance en provenance du capteur de distance (18),
déterminer une information de distance tridimensionnelle d'une distance entre la main et le capteur de distance sur la base du signal de mesure de distance,
déterminer un mouvement d'au moins certaines parties de la main sur la base de l'information de distance tridimensionnelle, la détermination du mouvement d'au moins certaines parties de la main comprenant la détermination d'un mouvement de rotation de la main autour d'un axe de rotation de la main lorsque la main tourne par rotation du poignet et/ou de l'avant-bras ; et
fournir un signal de commande à l'interface utilisateur pour effectuer la commande de l'interface utilisateur sur la base du mouvement d'au moins certaines parties de la main, l'interface utilisateur étant commandée sur la base du mouvement de rotation.
